# EUROPÄISCHE PATENTSCHRIFT

(11) **EP 0 536 712 B1**
(45) Veröffentlichungstag und Bekanntmachung des Hinweises auf die Patenterteilung: **09.08.1995**
(21) Anmeldenummer: 92117096.5
(22) Anmeldetag: 07.10.1992
(51) Int. Cl.: C09D 201/02, C09D 7/12, C09D 201/06

(54) **Katalysatorfreies Einkomponenten-Überzugsmittel und dessen Verwendung zur Herstellung von säurebeständigen Lackierungen**
One-component coating free from catalysts and its application by the manufacture of acid-resistant lacquers
Revêtement à un composé sans catalyseur et son utilisation pour la préparation de vernis résistants aux acides

(30) Priorität: 11.10.1991 DE 4133704
(43) Veröffentlichungstag der Anmeldung: 14.04.1993
(73) Patentinhaber: Herberts Gesellschaft mit beschränkter Haftung, 42285 Wuppertal (DE)
(72) Erfinder: Konzmann, Heinz, Dr., W-5600 Wuppertal 2 (DE); Herrmann, Friedrich, W-5600 Wuppertal 1 (DE); Diener, Wolfgang, Dr., W-5600 Wuppertal 1 (DE)
(74) Vertreter: Türk, Gille, Hrabal, Leifert

(56) Entgegenhaltungen:
- EP-A- 0 129 105
- EP-A- 0 224 158
- EP-A- 0 230 957
- EP-A- 0 310 011
- DE-A- 3 539 365

## Beschreibung

Die Erfindung betrifft ein Überzugsmittel, das zur Herstellung von besonders säurebeständigen Klar- und Decklacküberzügen, insbesondere bei der Herstellung von Mehrschichtlackierungen auf dem Kraftfahrzeugsektor, geeignet ist.

In der Kraftfahrzeugindustrie werden im Rahmen der geänderten Qualitätswünsche andere Anforderungen an die Lackierung der Fahrzeuge gestellt. Anforderungen wie hoher Glanz und mechanische Beständigkeit, z. B. gegen Steinschlag, sind schon lange erhobene Forderungen. Weitere Anforderungen wurden später in bezug auf Benzin- und Ölresistenz der lackierten Oberflächen gestellt. Im Rahmen der sich verändernden Umwelt treten jedoch zusätzliche Belastungen auf. Ein wichtiger Gesichtspunkt dabei ist der sogenannte "saure Regen". Deshalb werden an die Lackindustrie Anforderungen gestellt, säureresistente Überzüge auf Gegenständen zu erzeugen, die der normalen Witterung ausgesetzt sind. Weitere aggressive Bedingungen können auftreten, wenn tierische Exkremente auf den Lack gelangen und dort längere Zeit verweilen.

Während frühere Testmethoden häufig nur mit verdünnter Essigsäure eine Beständigkeit des Lackes überprüften, fordern neue Prüfmethoden wesentlich schärfere Bedingungen. So wird mit bis zu 40%iger Schwefelsäure und teilweise erhöhter Temperatur bis zu 70°C getestet. Als Ergebnis soll der Lack an den untersuchten Stellen seine Schutzeigenschaften und sein Aussehen möglichst nicht verändern. Es darf also allenfalls eine geringe Rauhigkeit der Oberfläche durch diese Säurebelastung auftreten.

Ein weiterer Gesichtspunkt, den die Lackindustrie zu berücksichtigen hat, ist der Umgang mit physiologisch gefährlichen Stoffen, z. B. Kanzerogenen oder Mutagenen. Verbindungen, die teilweise nicht unbedenklich sind, umfassen z. B. Isocyanate oder aromatische Lösemittel.

Beim Umgang mit Lackbindemitteln auf Basis von über freie Isocyanatgruppen vernetzenden Lacksystemen können flüchtige reaktive Isocyanate unter Umständen unter den Applikationsbedingungen in die Gasphase übergehen und so das Arbeitspersonal gefährden. Ebenso ist ein Hautkontakt mit den isocyanathaltigen Überzugsmitteln möglichst zu vermeiden.

Es gibt aus diesem Grunde schon Entwicklungen, den Einsatz von reaktiven Isocyanaten in Überzugsmitteln für die Automobilindustrie zu vermeiden. In der EP-A-34 720 werden oxazolidinhaltige Acrylatharze beschrieben, die mit Wasser oder Luftfeuchtigkeit zu Filmen vernetzen. Das System hat jedoch den Nachteil, daß die härtende Oberfläche einem tieferen Eindringen des Wassers in die unteren Lackschichten entgegenwirkt und dort eine vollständige Härtung verhindert. Ebenfalls sind Bindemittel-Systeme bekannt, z. B. aus der EP-A-50 249, die siliciumhaltige Polymere umfassen, die über hydrolyseempfindliche Gruppen am Si-Atom mit Feuchtigkeit reagieren und vernetzen können. Diese Systeme haben den Nachteil daß die Vernetzung abhängig von der relativen Luftfeuchtigkeit ist. Auf der anderen Seite muß unter Lagerbedingungen sichergestellt sein, daß keine Feuchtigkeit an das Überzugsmittel gelangen kann, da sonst eine übliche Verarbeitung nicht mehr zu gewährleisten ist.

In der US-A-4,408,018 werden Acrylpolymere beschrieben, in die Acetoacetat-Gruppierungen eingeführt worden sind. Diese sollen mit α,β-ungesättigten Estern vernetzen. Als Katalysator für diese Vernetzungsreaktion sind starke Basen erforderlich. Diese verbleiben nach der Aushärtung im Überzugsfilm und beeinträchtigen die Eigenschaften des Überzugs, z. B. Vergilbung oder Trübung des Klarlackfilms.

In der DE-OS 35 41 140, der EP-A-160 824 und der EP-A-310 011 werden Härtungskomponenten und Bindemittel-Systeme für die Lackindustrie beschrieben. Es handelt sich hierbei um lösemittelhaltige zweikomponentige Systeme (2K-Systeme), die auf Basis eines polyungesättigten Acrylatharzes und einer CH-, NH- oder SH-aktiven Härterkomponente hergestellt werden. Um eine schnelle, ausreichende Vernetzung zu bekommen, sind katalytisch wirksame Verbindungen im Lacksystem notwendig. Als Katalysatoren sind beispielsweise beschrieben: tertiäre Amine, Amidine, Guanidine, Phosphane sowie Halogenide von quartären Ammonium-Verbindungen. Die Menge der Katalysatoren kann bis zu 5 Gew.% betragen. Sie werden zur Beschleunigung für die Härtungsreaktion benötigt, die gegebenenfalls durch erhöhte Temperaturen unterstützt werden kann.

Die oben erwähnten Überzugsmittel müssen als zweikomponentige Systeme angewendet werden. Sie enthalten katalytisch wirksame Verbindungen und können daher nicht als Einkomponenten-Systeme (1K-Systeme) formuliert werden. Die Topfzeiten der vor der Applikation gemischten katalysatorhaltigen 2K-Systeme liegen bei maximal 48 Stunden, d. h. danach sind die Überzugsmittel nicht mehr anwendbar. Werden diese bekannten Überzugsmittel als Klar- oder Decklacke eingesetzt, so weisen sie eine verringerte Vergilbungsstabilität unter Lichtbelastung auf. Außerdem genügen die bekannten Überzugsmittel den vorstehend besprochenen verschärften Kriterien gegen einen Säureangriff nicht.

Aufgabe der Erfindung war es deshalb, ein Überzugsmittel zur Verfügung zu stellen, das frei von reaktivem Isocyanat ist, eine verbesserte Lagerungsfähigkeit aufweist und das einen nicht vergilbenden Überzug ergibt, der verschärften Anforderungen an die Säurebeständigkeit genügt und das daher insbesondere zur Anwendung als Klar- oder Decklack geeignet ist.

Es hat sich gezeigt, daß diese Aufgabe gelöst werden kann durch ein katalysatorfreies Einkomponenten-Überzugsmittel, das
A) eine oder mehrere als Vernetzer wirkende Verbindungen mit im Mittel mindestens zwei CH-aziden Wasserstoffatomen,
B) ein oder mehrere zur Michael-Addition geeignete (Meth)acrylatcopolymere, Polyester- und/oder Polyurethanharze mit über das Carbonyl-Kohlenstoffatom von Carbonyl-, Ester- und/oder Amid-Gruppen gebundenen α,β-ungesättigten Gruppen, mit einem C=C-Äquivalentgewicht von 85 - 1800 und einem Gewichtsmittel der Molmasse (M̅w) von 170 - 50000. In dem Überzugsmittel beträgt das Äquivalentverhältnis der Komponente A) zur Komponente B) 2:1 bis 1:2. Das Überzugsmittel, das einen Gegenstand der Erfindung darstellt, enthält Lösemittel und/oder Wasser. Es kann lackübliche Additive enthalten. Gegebenenfalls enthält es auch ein oder mehrere Pigmente.

Es hat sich gezeigt, daß ein derartiges Überzugsmittel lagerfähig ist. Es wird ohne Katalysator appliziert und kann nach dem Auftrag durch Erhitzen auf Temperaturen von 100 - 180°C, insbesondere von 110 - 180°C, vernetzt bzw. gehärtet werden. Die erhaltenen Überzüge bestehen den eingangs erwähnten verstärkten Säuretest, nämlich die Behandlung mit bis zu 40%iger Schwefelsäure bei erhöhter Temperatur bis zu 70°C. Die erhaltenen Überzüge sind vergilbungsfrei und weisen eine gute Härte auf.

Es ist überraschend, daß das erfindungsgemäße Überzugsmittel ohne Katalysatoren härtbar ist, da es dem Fachmann geläufig ist, daß Michael-Additionen nur in Gegenwart basischer Katalysatoren ablaufen (dies geht z. B. aus "Oranicum", VEB DEUTSCHER VERLAG DER WISSENSCHAFTEN; BERLIN 1977, Seite 632, hervor).

Bevorzugt handelt es sich bei den in den erfindungsgemäßen Überzugsmitteln als Komponente A) eingesetzten CH-aziden Vernetzern um solche, die mindestens zwei CH-azide Wasserstoffatome enthalten, die aus einer oder mehreren der folgenden Gruppierungen stammen, die gleich oder verschieden sein können: 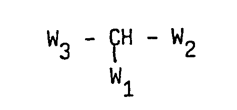
mit
- W₁: ausgewählt aus 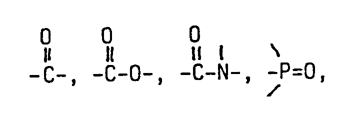 -CN oder -NO₂
- W₂: ausgewählt aus 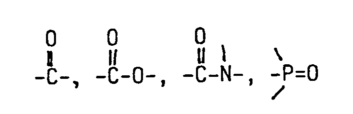 oder -CN, und
- W₃: ausgewählt aus 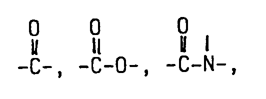 H, Alkyl oder Alkylen,
wobei die vorstehend für die Reste W₁, W₂ und W₃ definierten Carboxyl- oder Carbonamid-Gruppen jeweils über das Kohlenstoffatom an die CH-Gruppe gebunden sind und die CH-Gruppe über mindestens einen der Reste W₁, W₂ und/oder W₃ an eine polymere oder oligomere Einheit gebunden ist. Die CH-azide Funktionalität der Komponente A) beträgt im Mittel ≧ 2 pro Molekül. Wenn daher W₃ in der vorstehenden allgemeinen Formel die Bedeutung eines Wasserstoffatoms hat, so genügt eine derartige Gruppe, da diese zwei azide Wasserstoffatome aufweist.

Wie vorstehend erwähnt, beträgt die CH-azide Funktionalität der Komponente (A) im Mittel ≧ 2. Dies bedeutet, daß im Gemisch mit höherfunktionellen Molekülen auch monofunktionelle Moleküle verwendet werden können. Bevorzugt sind die CH-aziden Vernetzerverbindungen im wesentlichen frei von primären, sekundären oder tertiären Aminogruppen, da diese die Lagerstabilität und die Lichtbeständigkeit negativ beeinflussen können.

Im Folgenden sind Beispiele für CH-azide Vernetzerkomponenten A aufgeführt, die unter die vorstehende allgemeine Formel fallen. Diese Beispiele werden im Folgenden in drei Gruppen A1, A2 und A3 unterteilt.

In der Gruppe A1 sind im Molekül im Mittel mindestens zwei Gruppen mit aktiven H-Atomen vom Typ 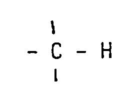
enthalten, die sich von Methantricarbonsäuremonoamideinheiten ableiten.

Geeignete Verbindungen A1 sind beispielsweise Umsetzungsprodukte von Malonsäurediester wie Malonsäuredimethyl-, diethyl-, dibutyl-, dipentylester mit Polyisocyanaten.

Beispiele für derartige erfindungsgemäß einsetzbare Isocyanate sind (Cyclo)aliphatische oder aromatische Polyisocyanate wie Tetramethylendiisocyanat, Hexamethylendiisocyanat, 2,2,4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanatomethylcyclohexan (=Isophorondiisocyanat, IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-4''-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für das erfindungsgemäße Verfahren geeignet sind die bekannten Polyisocyanate, die hauptsächlich bei der Herstellung von Lacken eingesetzt werden, z. B, Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z. B. die in der Polyurethanchemie an sich bekannten Hydroxypolyester, Hydroxypolyether und/oder hydroxylgruppenhaltigen Acrylatharze verwendet.

In diesen bekannten Prepolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und Mengenverhältnisse der bei der Herstellung der NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Als Verbindung A1 eignen sich aber auch Umsetzungsprodukte von Estern und Teilestern mehrwertiger Alkohole der Malonsäure mit Monoisocyanaten. Mehrwertige Alkohole sind z. B. zwei- bis fünf-wertige Alkohole wie Ethandiol, die verschiedenen Propan-, Butan-, Pentan- und Hexandiole, Polyethylen- und Polypropylendiole, Glycerin, Trimethylolethan und -propan, Pentaerythrit, Hexantriol und Sorbit. Geeignete Monoisocyanate sind z. B. aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat.

Geeignet sind auch die entsprechenden Malonester von OH-Gruppen enthaltenden Acrylharzen, Polyestern, Polyurethanen, Polyethern, Polyesteramiden und -imiden und/oder Umsetzungsprodukte von Malonsäurehalbestern wie Malonsäuremonoethylester mit aliphatischen und aromatischen Epoxidharzen, z. B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen, ferner Gemische dieser Verbindungen.

Die Beispiele der folgenden Gruppe A2 zeigen eine geeignete Härtungskomponente mit aktiven CH-Gruppen, die mindestens zwei Gruppen der Formel (I) 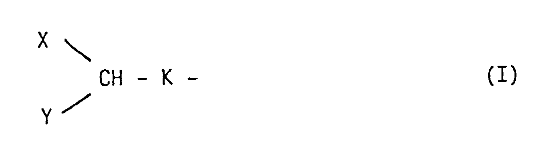
oder Struktureinheiten der Formel (I') oder (I'') 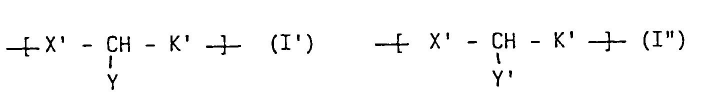
enthält, in der bedeuten: 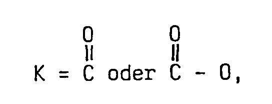
wobei letztere Gruppe über das C-Atom an die CH-Gruppe gebunden ist;
X, Y = gleich oder verschieden 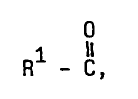
CO₂R¹, CN, NO₂, CONH₂, CONR¹H, CONR¹R¹, wobei die Reste R¹ gleich oder verschieden sein können und für einen Kohlenwasserstoffrest, vorzugsweise einen Alkylrest mit 1 bis 12, vorzugsweise 1 bis 6 C-Atomen stehen, der auch durch Sauerstoff oder einen N-Alkylrest unterbrochen sein kann, mit der Maßgabe, daß nur einer der beiden Reste X, Y die NO₂-Gruppe darstellen kann; 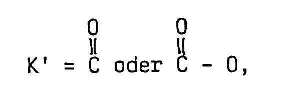
wobei letztere Gruppe über das C-Atom an die CH-Gruppe gebunden ist,
X', Y' = gleich oder verschieden 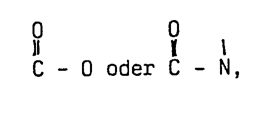
mit der Maßgabe, daß bei K' und X' gleich 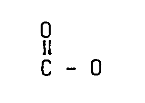
der Rest Y' vorzugsweise nicht gleich 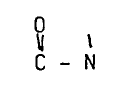
ist.

Die Zahl der Gruppen (I) in dem erfindungsgemäßen Härter beträgt vorzugsweise 2 bis 200 und insbesondere 2 bis 10, wobei sich die größeren Zahlenwerte auf oligomere oder polymere Produkte beziehen und hier Mittelwerte darstellen.

Vorzugsweise besitzt die erfindungsgemäß verwendbare Härtungskomponente A2 die Formel (II) 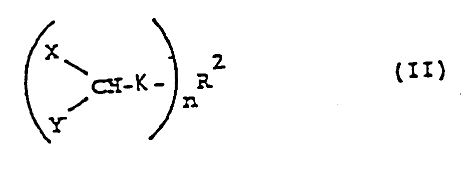
in der X, Y und K die obige Bedeutung haben, R² den Rest eines Polyols 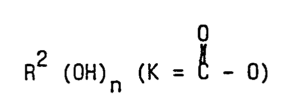
oder den Rest R² einer Polycarbonsäure 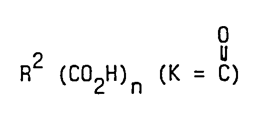
darstellt und n mindestens 2, vorzugsweise 2 bis 200, insbesondere 2 bis 10 bedeutet. Im Falle von oligomeren oder polymeren Härtungskomponenten handelt es sich bei diesen Zahlenangaben wiederum um Mittelwerte.

Weiterhin bevorzugt sind Härtungskomponenten, die unter die Gruppe A2 fallen, die man durch Umesterung von Verbindungen der Formel (III) oder der Formel IV) 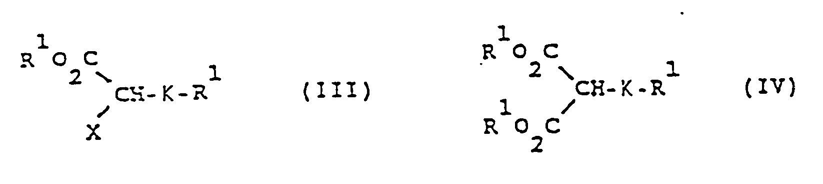
mit Polyolen R²(OH)ₙ erhält, wobei X, K und R¹ die obige Bedeutung haben.

Bei den vorstehend genannten Polyolen R²(OH)ₙ kann es sich um einen mehrwertigen Alkohol handeln, der vorzugsweise 2 bis 12, insbesondere 2 bis 6 C-Atome enthält. Beispiele hierfür sind: Ethylenglykol, Propylenglykol-(1,2) und -(1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycyclohexyl)-propan, 2,2-Bis-(4-(β-hydroxyethoxy)phenyl)-propan, 2-Methyl-1,3-propandiol, Glycerin, Trimethylolpropan, Hexantriol-(1,2,6), Butantriol-(1,2,4), Tris-(β-hydroxyethyl)-isocyanurat, Trimethylolethan, Pentaerythrit und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z. B. ε-Caprolacton oder Hydroxycarbonsäuren, wie z. B. Hydroxypivalinsäure, ω -Hydroxydecansäure` ω -Hydroxycapronsäure, Thioglykolsäure erhalten werden, können eingesetzt werden. Der Index n in obiger Formel (II) steht im Falle derartiger mehrwertiger Alkohole vorzugsweise für 2 bis 4.

Alternativ kann das Polyol eine oligomere oder polymere Polyolverbindung (Polyolharz) darstellen, deren Molekulargewicht M̅w (Gewichtsmittel, bestimmt mittels Gelchromatographie; Polystyrolstandard), üblicherweise im Bereich von etwa 300 bis etwa 50000, vorzugsweise etwa 5000 bis etwa 20000 liegt. In Sonderfällen kann das Molekulargewicht jedoch 100000 und mehr betragen. Als Oligomere/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit CO₂ Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole oder Acrylatharzpolyole. Bevorzugt sind Polyetherpolyole, Polyesterpolyole, Acrylatharze und Polyurethanpolyole. Derartige Polyole, die auch in Mischung eingesetzt werden können, sind beispielsweise in der DE-OS 31 24 784 beschrieben.

Beispiele für Polyurethanpolyole ergeben sich aus der Umsetzung von Di-und Polyisocyanaten mit einem Überschuß an Di- und/oder Polyolen. Geeignete Isocyanate sind z. B. Hexamethylendiisocyanat, Isophorondiisocyanat, Toluylendiisocyanat als auch Isocyanate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzung von Di- und Polyisocyanaten mit äquimolaren Mengen von Aminoalkoholen, z. B. Ethanolamin oder Diethanolamin, erhalten werden.

Beispiele für Polyesterpolyole sind die bekannten Polykondensate aus Di-oder Polycarbonsäuren oder deren Anhydriden, wie Phthalsäureanhydrid, Adipinsäure usw., und Polyolen wie Ethylenglykol, Trimethylolpropan, Glycerin usw.

Geeignete Polyamidpolyole können in ähnlicher Weise wie die Polyester erhalten werden, indem man die Polyole zumindest teilweise durch Polyamine, wie Isophorondiamin, Hexamethylendiamin, Diethylentriamin usw. ersetzt.

Beispiele für Polyacrylatpolyole oder OH-gruppenhaltige Polyvinylverbindungen sind die bekannten Copolymerisate aus hydroxylgruppenhaltigen (Meth)Acrylsäureestern oder Vinylalkohol und anderen Vinylverbindungen, wie z. B. Styrol oder (Meth)Acrylsäureestern.

Die obigen Polycarbonsäuren R²(CO₂H)ₙ, wobei n hier bevorzugt 2 bis 4 ist, können aliphatischer, cycloaliphatischer, aromatischer und/oder heterocyclischer Natur sein und gegebenenfalls, z. B. durch Halogenatome, substituiert und/oder gesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, Glutarsäure, Maleinsäure, Fumarsäure, dimere und trimere Fettsäuren, wie Ölsäure, gegebenenfalls in Mischung mit monomeren Fettsäuren oder cyclischen Monocarbonsäuren, wie Benzoesäure, p-tert-Butylbenzoesäure oder Hexahydrobenzoesäure. Weiterhin die Umsetzungsprodukte der oben genannten Polyole R²(OH)ₙ mit cyclischen Carbonsäureanhydriden.

Bei der erfindungsgemäß verwendbaren Härtungskomponente A2 handelt es sich, je nach Art der Polyol- bzw. Polycarbonsäurekomponente, um mehr oder weniger viskose Flüssigkeiten oder um Feststoffe, die zumindest in den üblichen Lacklösemitteln weitgehend löslich sind und vorzugsweise weniger als 5 Gew.%, insbesondere weniger als 1 Gew.% an vernetzten Anteilen enthalten. Das CH-Äquivalentgewicht, das ein Maß für die Menge an Gruppen (I) bzw. Struktureinheiten (I')/(II'') in (A2) ist, liegt im allgemeinen zwischen 100 und 5000, vorzugsweise 200 und 2000 und das mittlere Molekulargewicht M̅w in der Regel zwischen 1000 und 100000, vorzugsweise zwischen 2000 und 50000 (gelchromatographisch bestimmt; Polystyrolstandard). Verfahren zur Herstellung solcher Verbindungen sind in der EP-A-O 310 011 näher beschrieben.

Weitere Beispiele für die erfindungsgemäß verwendbare Härterkomponente sind solche vom Typ A3, bei dem sich die Gruppierung CH ableitet von einer Verbindung mit der Gruppierung -CO-CHR³-CO-, NC-CHR³-CO-, NC-CH₂-CN, =PO-CHR³-CO-, =PO-CHR³-CN, =PO-CHR³-PO=, -CO-CHR³-NO₂, worin R³ C₁-C₈-Alkyl, H, vorzugsweise Wasserstoff ist. β-Dioxoverbindungen sind bevorzugt.

Die vorstehenden Gruppierungen von A3 können an mindestens eine mehrwertige monomere oder polymere Verbindung gebunden sein. Sie können beispielsweise an mindestens eine Verbindung der Gruppe ein- oder mehrwertige Alkohole, OH-Gruppen enthaltende Polymere, Polyamine und Polymercaptane gebunden sein. Sie sind, bezogen auf die CH-Funktion mehrwertig. So können sie beispielsweise durch Veresterung eines Polyepoxids mit einer die Gruppierung bildenden -CH-Carbonsäure, z. B. Cyanessigsäure, hergestellt worden sein. Man erhält so eine Komponente A3 mit zwei aktiven H-Atomen je Epoxidgruppe. Hierbei lassen sich aromatische oder aliphatische Polyepoxide einsetzen.

Geeignete Beispiele für Verbindungen des Typs A3 sind Ketone, wie Acetylaceton, Benzoylaceton, Acetyldibenzoylmethan, ferner Ester der gegebenenfalls alkylsubstituierten Acetessigsäure wie α- und/oder γ-Methylacetessigsäure, oder der Acetondicarbonsäure, esterartig gebundene Malonsäureeinheiten der Malonsäure und deren Monoalkylderivate, geradkettig oder verzweigt, mit 1 bis 6 C-Atomen im Alkylrest, z. B. Methyl, Ethyl und n-Butyl oder auch Phenyl, oder der Cyanessigsäure mit ein- bis 6-wertigen Alkoholen mit 1 bis 10 C-Atomen. Die alkylsubstituierten Ester, z. B. α-Methyl- oder α,γ-Dimethylacetatessigester, haben nur ein aktives H-Atom und werden daher vorzugsweise in Form von Di- oder Polyestern mehrwertiger Alkohole eingesetzt, um eine genügende Anzahl reaktiver Gruppen zur Verfügung zu haben. Geeignete Alkohole für die Veresterung vorstehender Säuren sind z. B. Methanol, Ethanol, Butanol, Octanol und/oder, was bevorzugt ist, mehrwertige Alkohole bzw. Polyhydroxyverbindungen. Weitere Beispiele für A3 sind z. B. Acetessigester, Ethandiol-bisacetessigester, Glycerintrismalonsäureester, Trimethylolpropantris-acetessigester, Teilester dieser Säuren mit mehrwertigen Alkoholen, ebenfalls die entsprechenden Ester von OH-Gruppen enthaltenden Acrylharzen, Polyestern, Polyethern, Polyesteramiden und -imiden, Polyhydroxylaminen, ferner Nitrile dieser Säuren, sofern diese existieren, z. B. Malonsäuremono- oder -dinitril, Alkoxycarbonyl-methanphosphonsäureester und die entsprechenden Bis-methanphosphonsäureester. Die vorstehend genannten Säuren können auch in Form von Amiden an Amine, vorzugsweise Polyamine, gebunden sein, die auch Oligomere und/oder Polymere einschließlich Aminharze umfassen, wobei aliphatische Amine bevorzugt sind.

Wenn man von Polyaminen ausgeht, lassen sich Verbindungen A3 in Form von Amiden herstellen. So kann man z. B. von 1 Mol eines Alkylendiamins ausgehen, das mit 2 Mol Acetessigester umgesetzt wird unter Bildung einer Verbindung, die ebenfalls vier durch Amidgruppen aktivierte H-Atome aufweist.

Als Verbindungen für A3 eignen sich auch reaktive Nitroverbindungen, z. B. Nitroessigsäurederivate, wie Tris-(nitroessigsäure)-glycerinester oder Trimethylolpropan-nitroessigsäureester.

Unter Verbindungen für A3, die Gruppen des Typs -CH- bilden, sind z. B. Diketen sowie dessen Mono-α-Alkylsubstitutionsprodukte, ferner Tetrahydrodioxin zu nennen, die mit geeigneten Komponenten unter Bildung von Acetessigester- oder -amid-Gruppen reagieren können.

Die Härterkomponenten A können in üblichen Lösemitteln hergestellt werden. Es ist günstig solche Lösemittel zu verwenden, die später bei der Herstellung des Überzugsmittels nicht stören. Es ist auch günstig, den Gehalt an organischen Lösemitteln möglichst gering zu halten. Wenn die Härterkomponente A polare Gruppen enthält, z. B. Amid- oder Urethan-Gruppierungen, so ist eine leichte Dispergierung in Wasser möglich. Dies kann gegebenenfalls auch dadurch unterstützt werden, daß die Vernetzerkomponenten neutralisierbare ionische Gruppen, z. B. Carboxylgruppen, im Oligomer- oder Polymergerüst enthalten. Solche Vernetzer mit ionischen Gruppen können gut in Wasser dispergiert werden. Dabei kann der Gehalt an organischen Lösemitteln auf niedrige Werte gesenkt werden, ohne die Viskosität der Vernetzerlösung wesentlich zu erhöhen.

Als zur Michael-Addition befähigte Bindemittel (B) werden Verbindungen eingesetzt, die mindestens zwei zur Michael-Addition befähigte Gruppen enthalten, also Gruppen, die durch mindestens eine negativierende Gruppe aktivierte Doppelbindungen aufweisen (Michael-Acceptor). Die α,β-ungesättigten Gruppen der Komponente B können in die Ketten der Copolymeren oder Harze eingebaut sein. Sie können bevorzugt auch seiten-und/oder endständig sein. Geeignete Verbindungen (B) sind beispielsweise in der DE-PS-835 809, in der US-PS-4,408,018 sowie in den EP-OS 16 16 79 und 22 41 58 beschrieben, auf die hier Bezug genommen wird. Es sind Verbindungen (B) mit mindestens zwei Gruppen der Formel

R⁵R⁴C = CR⁴ - Z (V)

in der bedeuten:
- R⁵ =: Wasserstoff oder ein Kohlenwasserstoffrest, vorzugsweise ein Alkylrest mit 1 bis 12, vorzugsweise mit 1 bis 4 C-Atomen, wie die Methyl-, Ethyl-, n-Propyl-, Iso-Propyl-, n-Butyl- oder tert. Butylgruppe;
- R⁴ =: gleich oder verschieden und Wasserstoff, ein Kohlenwasserstoffrest, vorzugsweise Alkylrest mit 1 bis 10, vorzugsweise 1 bis 4 C-Atomen, eine Estergruppe -CO₂R¹ eine -CN, -NO₂, -SO₂-, -CONHR¹, -CONR¹R¹ oder -COR¹-Gruppe, wobei R¹ gleich oder verschieden, und wie vorstehend für die Formel I definiert sind;

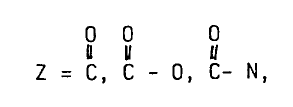

wobei die beiden letzteren Gruppen über das C-Atom an die CR⁴-Gruppe gebunden sind.

Bevorzugt stehen R⁵ und R⁴ in der obigen R⁵R⁴C=C-Gruppe jeweils für Wasserstoff.

Die obigen Gruppen V sind indirekt miteinander verbunden. Als indirekte Verknüpfung kommt hier beispielsweise ein Kohlenwasserstoffrest, vorzugsweise jedoch der Rest eines mehrwertigen Alkohols oder eines mehrwertigen Amins oder Aminoalkohols in Frage. Diese indirekte Verknüpfung kann dabei auch ein Teil der Kette eines Oligomeren und/oder Polymeren sein, d. h. die Gruppen V können in den Seitenketten des Oligomeren bzw. Polymeren vorhanden sein oder diese Seitenketten bilden.

Nach einer speziellen Ausführungsform besitzt die Verbindung (B) die Formel

(R⁵R⁴C = CR⁴ - Z)ₘR² (VI)

in der R⁵, R⁴ und Z die Bedeutung gemäß Formel (V) haben, R² der Bedeutung in Formel (II) entspricht und m mindestens 2, vorzugsweise 2 bis 200 bedeutet.

Die Gruppe R⁵R⁴C = CR⁴ - Z - (V) kann beispielsweise von einer ein- oder mehrfach ungesättigten Mono- oder Dicarbonsäure mit 2 bis 20, vorzugsweise 3 bis 10 C-Atomen abgeleitet sein.

Beispiele für solche Carbonsäuren sind Crotonsäure, Citraconsäure oder deren Anhydrid, Sorbinsäure, Fumarsäure, Mesaconsäure, substituierte und unsubstituierte Zimtsäuren, Dihydrolävulinsäure, Malonsäuremononitril, α-Cyanacrylsäure, Alkylidenmalonsäure, Alkylidenacetessigsäure, vorzugsweise Acrylsäure, Methacrylsäure und/oder Maleinsäure oder dessen. Anhydrid. Die über die Gruppe Z, aber auch über den Rest R⁴ mögliche Anknüpfung des Michael-Acceptors an das Verbindungsglied, wie an einen polymeren Träger, kann über Ester-, Amid-, Urethan- oder Harnstoffgruppen erfolgen.

Entsprechend dem Vorstehenden können die Gruppen gemäß der Formel (V) an den Rest eines Polyols, eines Polyamins, Polyamids oder Polyiminoamids gebunden sein, wobei dieser Rest auch oligomer oder polymer sein kann.

Als Polyole kommen hier grundsätzlich die gleichen in Frage, wie weiter oben im Zusammenhang mit dem Michael-Donator erwähnt, also mehrwertige Alkohole oder oligomere bzw. polymere Polyolverbindungen, z. B. Polyetherpolyole, Polyesterpolyole, Acrylatharzpolyole und Polyurethanpolyole.

Als Aminogruppen enthaltende Träger (Polyamine) kommen beispielsweise die oben erwähnten Alkylendiamne und deren Oligomere, wie Ethylendiamin, Propylendiamin, Butylendiamin, Diethylentriamin, Tetramine und höhere Homologe dieser Amine, ferner Aminoalkohole, wie Diethanolamin oder dergleichen in Betracht.

Als Beispiele für Verbindungen (B) seien hier genannt:
Alkylglykoldi(meth)acrylate wie Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykolkiacrylat, 1,10-Decamethylenglykoldiacrylat, Trimethylolpropantriacrylat, Pentaerythrittetraacrylat, Pentaerythrittriacrylat und die entsprechenden Methacrylate.

Außerdem kann die über ein Carbonylkohlenstoffatom gebundene α,β-ungesättigte Gruppe an Polymere gebunden sein, z. B. Kondensationspolymere, wie Polyester oder Polyadditionspolymere` wie Polyurethane, Polyether oder (Meth)acrylcopolymere oder Vinylpolymerisate, wie Glycidyl(meth)acrylatcopolymere. Erwähnt seien hier beispielsweise Urethanacrylate, erhalten durch Umsetzung von Polyisocyanaten, wie Hexamethylendiisocyanat mit Hydroxyalkylacrylaten, wie Hydroxyethylacrylat oder durch Reaktion von hydroxylgruppenhaltigen Polyestern, Polyethern, Polyacrylaten mit Polyisocyanaten und Hydroxyalkylacrylaten, Urethanacrylate, erhalten durch Reaktion von Caprolactondiol oder -triol mit Polyisocyanaten und Hydroxyalkylacrylaten, Polyetheracrylate, erhalten durch Veresterung von Hydroxypolyethern mit Acrylsäure, Polyesteracrylate, erhalten durch Veresterung von Hydroxypolyestern mit Acrylsäure, Polyacrylate, erhalten durch Reaktion von Acrylsäure mit Vinylpolymerisaten mit Epoxidgruppen, z. B. Copolymerisate von Glycidyl(meth)acrylat oder Vinylglycidylether. Unter (Meth)acryl ist hier und im Folgenden Acryl- und/oder Methacryl zu verstehen.

Auch Gemische der obigen Verbindungen sind als Komponente (B) möglich.

Das C=C-Äquivalentgewicht der Komponente (B) liegt beispielsweise bei 85 bis 1800, vorzugsweise bei 180 bis 1200 und das Gewichtsmittel der Molmasse (M̅w) beispielsweise bei 170 bis 50000 und vorzugsweise 500 bis 30000. Bevorzugt besitzt die Komponente (B) eine OH-Zahl von unter 350, besonders bevorzugt von 30 bis 200.

Bevorzugt ist die Komponente (B) wie ebenfalls bevorzugt die Komponente (A) im wesentlichen frei von primären, sekundären und tertiären Aminogruppen.

Das erfindungsgemäße Überzugsmittel umfaßt eine Mischung aus der CH-aziden Vernetzerkomponente A sowie dem Bindemittel B. Es können auch Gemische von unterschiedlichen Komponenten A oder B eingesetzt werden. Die Bindemittel sind untereinander verträglich und werden zur besseren Mischbarkeit mit Lösemittel gemischt. Dafür sind Lösemittel bevorzugt, die später im Lack nicht negativ wirken.

Das Verhältnis der beiden Komponenten (A) und (B) hängt von der Anzahl der verfügbaren C-H-aziden Kohlenwasserstoffatome der Vernetzerkomponente und der Anzahl der ungesättigten Gruppen der α,β-ungesättigten Verbindung ab. Da die reaktiven Gruppen titrimetisch bestimmt werden können, können genau eingestellte stöchiometrische Mischungsverhältnisse herbeigeführt werden. Bevorzugt beträgt das Äquivalent-Verhältnis der CH-aziden:α,β-ungesättigten Gruppen 2:1 bis 1:2, insbesondere etwa 0,75:1 bis 1,25:1. Auf diese Weise wird in der Regel eine ausreichende Vernetzungsdichte erzielt.

Die Elastizität des vernetzten Produktes läßt sich innerhalb eines Toleranzbereiches z. B. durch die Kettenlänge der für (A) und (B) eingesetzten Oligomeren und/oder Polymeren steuern. Die eingesetzten Oligomeren und/oder Polymeren können somit je nach der gewünschten Elastizität des vernetzten Produktes gewählt werden. Der Vernetzungsgrad läßt sich über die Funktionalität der eingesetzten Verbindungen (A) und (B) steuern. So läßt sich der Vernetzungsgrad erhöhen, wenn in mindestens einer der Verbindungen (A) und (B) drei oder mehr reaktive Gruppen vorhanden sind.

Erfindungsgemäß können Vernetzerkomponente A und Bindemittelkomponente B oder die Mischungen davon in lösemittelhaltiger Form eingesetzt werden. Es ist jedoch auch möglich wäßrige Überzugsmittel herzustellen. Dazu können die Vernetzerkomponente (A) und die Bindemittelkomponente (B), gegebenenfalls mit geringen Lösemittelanteilen und gegebenenfalls zusammen mit Emulgatoren in die Wasserphase überführt werden. Bei den Lösungsmitteln handelt es sich bevorzugt um solche, die mit Wasser mischbar sind. Die Lösungsmittelmenge kann beispielsweise bis zu 15 Gew.%, bevorzugt bis zu 10 Gew.%, bezogen auf die fertige wäßrige Zusammensetzung, betragen. Als Emulgatoren können ionische oder nichtionische, bevorzugt nichtionische Emulgatoren, eingesetzt werden. Der Gehalt an Emulgator kann beispielsweise bei 0,5 bis 30 Gew.%, bevorzugt zwischen 1,5 und 15 Gew.%, bezogen auf den Festkörperanteil der Komponente (A) und Komponente (B) im fertigen wäßrigen Überzugsmittel, liegen.

Zur Bereitung der wäßrigen Dispersionen können übliche Verfahren angewendet werden, die dem Fachmann geläufig sind. So können beispielsweise die lösemittelhaltigen Formen der Komponenten A und B oder der Gemische davon weitgehend von Lösemitteln befreit werden, bevorzugt durch Destillation unter vermindertem Druck, worauf bevorzugt in die noch warmen, dünnviskosen Harze bzw. Harzmischungen der Emulgator eindispergiert werden kann und dann diese Mischung zu der Wasserphase gefügt werden kann, beispielsweise unter intensivem Mischen. Die Herstellung der Dispersion kann dabei durch Erwärmen der Wasserphase unterstützt werden. Als Mischaggregate sind beispielsweise schnelllaufende Rührer oder Rotor/Stator-Mischer geeignet. Es ist auch möglich das Dispersionsergebnis durch Hochdruck- oder Ultraschall-Homogenisatoren zu verbessern.

Das Verfahren kann kontinuierlich oder diskontinuierlich geführt werden. Die entstehenden Dispersionen können auch zu diesem Zeitpunkt miteinander gemischt werden. Man erhält eine wäßrige Öl-in-Wasser-Dispersion, die lagerstabil ist und mit Wasser ohne Probleme auf geringere, zur Applikation geeignete Festkörpergehalte eingestellt werden kann. Die erfindungsgemäß erhaltenen wäßrigen Dispersionen können beispielsweise einen Festkörperbereich von 25 - 55 Gew.%, bezogen auf die fertige Dispersion, aufweisen. Zur Applikation können sie gegebenenfalls mit Wasser, z. B. auf eine geeignete Spritzviskosität verdünnt werden.

Als Emulgatoren sind handelsübliche ionische oder nicht-ionische Emulgatoren geeignet. Es können beispielsweise Umsetzungsprodukte von Alkylphenyolen mit Alkylenoxiden oder Umsetzungsprodukte von Sorbitanfettsäureestern mit Alkylenoxiden, z. B. C₁-C₁₂-Alkylphenolethoxylate, verwendet werden.

Überzugsmittel auf Lösemittelbasis enthalten bevorzugt einen Bindemittelanteil von bis zu 70 Gew.%, besonders bevorzugt bis zu 60 Gew.%. Die Untergrenze liegt bevorzugt über 30 Gew.%, bezogen jeweils auf das fertige Überzugsmittel.

Die erfindungsgemäßen Überzugsmittel können aus den Einzelkomponenten nach üblichen, dem Fachmann geläufigen, Verfahren hergestellt werden. Zur Herstellung der Überzugsmittel können den erfindungsgemäß eingesetzten Vernetzungs- und Bindemittelkomponenten gegebenenfalls übliche lacktechnische Additive zugesetzt werden, wie z. B. Antikratermittel, Antischaummittel, Verlaufsmittel, Antiabsetzmittel, Viskositätsregler, UV-Stabilisatoren oder Haftvermittler. Über die Menge der Additive können die Applikations- und Verfilmungseigenschaften beeinflußt werden.

Es können gegebenenfalls auch bekannte Pigmente und/oder Füllstoffe in das Überzugsmittel eingearbeitet werden. Die Verfahren, z. B. Dispergieren oder Vermahlen, sind in der Literatur schon häufig beschrieben. Als Pigmente sind die üblichen Pigmente für Klar- oder Decklacke geeignet, beispielsweise Ruß, Titandioxid, feindisperses Siliciumdioxid, Aluminiumsilikat, Talkum, organische und anorganische Farbpigmente, transparente Farbstoffe, Metalleffekt-Pigmente oder vernetzte Polymer-Mikroteilchen. Je nach Auswahl der Pigmente können Metalleffekt-Decklacke, farbige Decklacke oder Klarlacke hergestellt werden.

Die erfindungsgemäßen Überzugsmittel können nichtreaktive Lösemittel enthalten. Diese dienen zur Einstellung der Viskosität bei der Applikation sowie zur Beeinflussung des Verlaufs sowie um bestimmte Lackeffekte zu erzielen. Beispiele für solche Lösemittel sind aromatische Kohlenwasserstoffe, z. B. Xylol, aliphatische Kohlenwasserstoffe, z. B. n-Hexan oder Cyclohexan, Ketone, wie z. B. Aceton, Methylisopropylketon, Ester, wie z. B. Butylacetat oder Ethylacetat, Ether, wie z. B. Methoxypropanol oder Butoxypropanol oder Alkohole, wie z. B. Isopropanol, Hexanol oder Ethylglykol. Über den Siedepunkt oder das unterschiedliche Lösevermögen der Lösemittel können Applikations- und Verlaufseigenschaften beeinflußt werden. Die zugesetzte Lösemittelmenge hängt somit von den gewünschten Eigenschaften, insbesondere Viskositätseigenschaften, der Überzugsmittel ab. Bei Verwendung von Wasser als Lösemittel entstehen echte Lösungen, Emulsionen oder Dispersionen. Wasserhaltige Überzugsmittel besitzen einen besonders geringen Gehalt an flüchtigen organischen Bestandteilen.

Die erfindungsgemäßen Überzugsmittel sind Einkomponenten-Systeme. Sie zeichnen sich durch eine hohe Lagerstabilität aus und können mehr als sechs Monate ohne wesentliche Viskositätsänderungen gelagert werden. Als Substrate sind metallische Substrate, Kunststoffe oder mit Überzügen vorbeschichtete Substrate geeignet.

Die erfindungsgemäßen Überzugsmittel können wäßrig oder nicht-wäßrig aufgebaut sein. Bei den wäßrigen Systemen ist es möglich, die Additive gegebenenfalls in die wäßrige Dispersion der Komponente A oder der Komponente B einzuarbeiten. Diese Komponenten können gegebenenfalls vor der Applikation zum Überzugsmittel gemischt werden. Vorzugsweise ist es jedoch möglich, auch wäßrige Einkomponenten-Systeme herzustellen.

Die erfindungsgemäßen Überzugsmittel werden nach bekannten Verfahren, wie z. B. Spritzen, Tauchen, Rollen oder Rakeln, appliziert. Dabei wird auf das gegebenenfalls schon mit weiteren Lackschichten versehene Substrat der Decklacküberzug aufgetragen. Nach einer Abdunstphase wird das applizierte Überzugsmittel durch Erwärmen vernetzt. Die Einbrenntemperaturen liegen zwischen 100 bis 180°C, bevorzugt zwischen 110 bis 150°C. Die Schichtdicke des eingebrannten Films beträgt ca. 15 - 50 »m. Dabei entsteht ein vernetzter, harter, glänzender sowie säurebeständiger Lacküberzug. Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit erfindungsgemäß als Klarlacke formulierten Überzugsmitteln können beispielsweise Basislacke überlackiert werden, die übliche Decklackpigmente enthalten können, bevorzugt enthalten sie Effektpigmente, wie z. B. Metallic-Pigmente. Als Bindemittelbasis des Basislacks werden bevorzugt Polyester-, Polyurethan- oder Acrylatharze eingesetzt. Diese Bindemittel können gegebenenfalls über Vernetzer, z. B. Melamin- oder Isocyanatderivate, vernetzt werden.

Beispiele für Basislacke, die mit erfindungsgemäßem Klarlack beschichtet werden können finden sich in den DE-A-36 28 124, 37 15 254, 37 22 005, 39 13 001 und 40 11 633.

Die erfindungsgemäßen Überzugsmittel eignen sich besonders für Decklacke oder Klarlacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, sie kann jedoch auch für andere Zwecke verwendet werden, wie z. B. für Haushaltsgeräte oder in der Möbelindustrie, um besonders säurestabile Überzüge zu erhalten.

In der vorliegenden Beschreibung wird auf für die Michael-Addition geeignete Verbindungen Bezug genommen. Ohne hier eine bindende Theorie aufstellen zu wollen, ist jedoch davon auszugehen, daß erfindungsgemäß zwar anteilsweise eine Michael-Addition ablaufen kann, jedoch auch weitere ungeklärte Vernetzungsmechanismen ablaufen.

### Beispiel 1

Es wird ein Härter nach EP-A-0 310 011, Beispiel A10 hergestellt. Dazu werden 2090,1 g Methantricarbonsäuretriethylester, 709,7 g Butandiol-1,4 und 450,0 g eines Polycaprolactondiols mit einem Molekulargewicht von 400 g/mol gemischt und unter Stickstoff 7 Stunden auf 125 bis 135°C erhitzt. Es wurden insgesamt 697,5 g Ethanol abdestilliert. Als Rückstand verblieben 2552,3 g einer farblosen, viskosen Flüssigkeit mit einem Äquivalentgewicht von 300 g/mol und einer gewichtsmittleren Molmasse (M̅w; Polystyrolstandard) von 8300 g/mol.

Durch Verdünnen mit Butylacetat wurde eine Lösung mit 60 % Festkörpergehalt hergestellt, C = C - Äquivalentgewicht: 500 g/mol.

### Beispiel 2

Es wird ein Bindemittel nach EP-A-0 310 011, Beispiel B hergestellt. Dazu werden 1000 T eines glycidylgruppenhaltigen Acrylatharzes, hergestellt aus Styrol, Glycidylmethacrylat und Dimethylmaleinat (Epoxidäquivalentgewicht 510) in 680 T Xylol bei 70°C gelöst und anschließend 127 T Acrylsäure und 1 T Tetraethylammoniumbromid zugesetzt. Unter Durchleiten von Luft wurde bei 80°C bis zu einer Saurezahl < 1 nachgerührt.

Nach Abdestillieren von 110 g Xylol im Vakuum wurden 560 g Butylacetat zugegeben. Die Harzlösung hatte einen Festkörpergehalt von 50 %, C = C - Äquivalentgewicht : 1280 g/mol.

### Beispiel 3

Durch Mischen folgender Bestandteile wird ein Klarlacküberzugsmittel formuliert:

### Gew.Teile

55 Harzlösung nach Beispiel 2
23,6 Harzlösung nach Beispiel 1
1 Terpen-Kohlenwasserstoff (Pineöl)
14,4 Gemisch aromatischer Kohlenwasserstoffe (Solvesso 150 und Solvesso 100 im Verhältnis 28 : 72)
3 Butanol
1,6 Gemisch handelsüblicher Lichtschutzmittel (Tinuvin 292 und Tinuvin 1130 im Verhältnis 1 : 1)
1 1%ige xylolische Lösung eines Phenylmethylsilikons (Silikonöl AR 200)
0,4 wasserlösliches Silikon (Worlee Additiv 315)
Anschließend wird, wie folgt, ein Lackaufbau hergestellt: Ein KTL-grundiertes (20 »m) und mit handelsüblichem Füller (35 »m) vorbeschichtetes Blech wurde mit üblichem Wasserbasislack (15 »m Trockenschichtdicke) beschichtet, 5 min bei 60°C im Umluftofen vorgetrocknet. Danach wurde der oben beschriebene auf eine Spritzviskosität von 30 sec (DIN Becher 4, 20°C) mit Xylol/Solvesso 150 1 : 1 eingestellte Klarlack mit einer Trockenschichtdicke von 35 »m appliziert. Nach 7 min Ablüften bei Raumtemperatur wurde Basislack und Klarlack gemeinsam 20 min bei 130°C (Objekttemperatur) eingebrannt.

Man erhält eine harte, glänzende Oberfläche. Der Klarlack zeigt gute Haftung und ergibt ein i.O. -Ergebnis im Säure-Test.
- Test 1 :: 40%ige Schwefelsäure, 15 min 60°C (Objekttemperatur) i.O. *
- Test 2 :: 10%ige Schwefelsäure, 10 min 70°C (Objekttemperatur) i.O. *

* keine optische Veränderung Test 1 zeigte nach 30 min keine Vermattung der Oberfläche.

Beispiel 3 wurde wiederholt, wobei jedoch dem Klarlacküberzugsmittel 3 Gew.-% einer 20%igen Lösung von Triphenylphosphin in Butylacetat als Katalysator entsprechend dem Stand der Technik zugesetzt wurden. Das Einbrennen erfolgte 45 min bei 80°C. Man erhielt eine glatte Oberfläche. Der Test mit 40%iger Schwefelsäure bei 60°C (Objekttemperatur) ergab 13 min i.o. Nach 21 min erfolgte eine Vermattung der Oberfläche.

### Beispiel 4

Es wird der Härter aus Beispiel 1 im Vakuum (< 250 mbar) auf einen Festkörpergehalt von etwa 90 Gew.% abdestilliert.

Das Bindemittel aus Beispiel 2 wird im Vakuum (< 250 mbar) unter Rühren auf einen Festkörpergehalt von etwa 90 Gew.% abdestilliert.

Die Komponente A und die Komponente B werden in der Wärme im Gewichtsverhältnis von A : B wie 35 : 45 gemischt. Anschließend werden in der Wärme 2,5 Gew.% eines handelsüblichen Emulgators auf der Basis von Sorbitanfettsäureester (G1350 der ICI) zugegeben und es wird gründlich homogenisiert. 60 Teile dieser Mischung werden langsam unter gutem Rühren in 40 Teile vollentsalztes Wasser (40°C) eingerührt. Nach gründlicher Homogenisation wird das so erhaltene Produkt unter Rühren abgekühlt. Die entstehende Dispersion hat einen Festkörpergehalt von etwa 50 Gew.%.

Auf ein wie im Beispiel 3 mit KTL, Füller und Wasserbasislack vorbeschichtetes Blech wird die Bindemitteldispersion, eingestellt mit Wasser auf einen Festkörpergehalt von 40 Gew.% aufgerakelt. Die Trockenschichtdicke beträgt 30 »m. Nach 10 min Ablüften bei Raumtemperatur wird das beschichtete Substrat 20 min bei 150°C eingebrannt.

Man erhält eine harte glänzende Oberfläche. Der Klarlack zeigt eine gute Haftung zum Substrat und ein gutes Ergebnis im Säuretest.

In einem unabhängigen Versuch wurde wie vorstehend gearbeitet, wobei jedoch mit Wasser auf eine Spritzviskosität von 30 sec (DIN-Becher 4, 20°C) eingestellt wurde. Die erhaltene Lösung wurde durch Spritzen appliziert. Die Trockenschichtdicke betrug ebenfalls 30 »m. Nach 5 min Ablüften bei Raumtemperatur wurde 20 min bei 150°C eingebrannt.

Man erhielt ebenfalls eine harte glänzende Oberfläche mit guter Haftung am Substrat und gutem Ergebnis im Säuretest.

## Patentansprüche

1. Überzugsmittel auf der Basis von zur Michael-Addition geeigneten Verbindungen und Vernetzern mit CH-aziden Gruppen, dadurch gekennzeichnet, daß es als Einkomponenten-Überzugsmittel formuliert und frei von Katalysatoren ist und enthält:
A) ein oder mehrere als Vernetzer wirkende Verbindungen mit im Mittel mindestens zwei CH-aziden Wasserstoffatomen und
B) ein oder mehrere zur Michael-Addition geeignete (Meth)acrylcopolymere, Polyester- und/oder Polyurethanharze mit über das Carbonyl-Kohlenstoffatom von 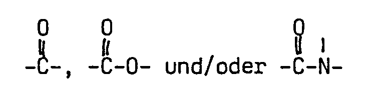 gebundenen α,β-ungesättigten Gruppen, mit einem C=C-Äquivalentgewicht von 85 - 1800 und einem Gewichtsmittel der Molmasse von 170 - 50000,
wobei das Äquivalentverhältnis von A:B 2:1 bis 1:2 beträgt; sowie Lösemittel, lackübliche Additive, gegebenenfalls Wasser, gegebenenfalls Pigmente und gegebenenfalls Füllstoffe und wobei die komponenten A) und B) im wesentlichen frei von primären, sekundären und tertiären Aminogruppen und frei von reaktivem Isocyanat sind.

2. Katalysatorfreies Einkomponenten-Überzugsmittel nach Anspruch 1, enthaltend eine Vernetzerkomponente A mit im Mittel mindestens zwei CH-aziden Wasserstoffatomen, die aus einer oder mehreren der folgenden Gruppierungen stammen, die gleich oder verschieden sein können: 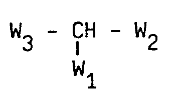 worin
W₁ = 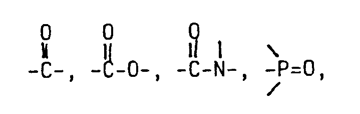 -CN oder -NO₂,
W₂ = 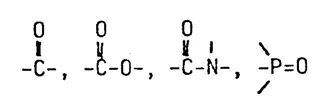 oder -CN,
W₃ = 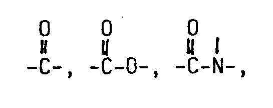 H, Alkyl oder Alkylen,
wobei die Reste 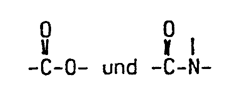 jeweils über das Kohlenstoffatom an die CH-Gruppe gebunden sind und die CH-Gruppe über mindestens einen der Reste W₁, W₂ und/oder W₃ an eine polymere oder oligomere Einheit gebunden ist.

3. Katalysatorfreies Einkomponenten-Überzugsmittel nach einem der vorhergehenden Ansprüche in wäßriger Form mit einem Lösemittelgehalt von 0 bis 15 Gew.%, bezogen auf das gesamte Überzugsmittel.

4. Katalysatorfreies Einkomponenten-Überzugsmittel nach einem der vorhergehenden Ansprüche enthaltend Wasser und einen oder mehrere Emulgatoren.

5. Verfahren zur Herstellung von säurebeständigen Klar- oder Decklack-Überzügen, durch Auftrag eines Überzugsmittels auf der Basis von CH-aziden Verbindungen und zur Michael-Addition geeigneten Verbindungen auf ein zu lackierendes Substrat und anschließende thermische Härtung des erhaltenen Überzugs, dadurch gekennzeichnet, daß man ein katalysatorfreies Einkomponenten-Überzugsmittel nach einem der Ansprüche 1 bis 4 verwendet und die Härtung bei Temperaturen von 100 bis 180°C durchführt.

6. Verfahren nach Anspruch 5, dadurch gekennzeichnet, daß die Härtung bei Temperaturen von 110°C bis 180°C erfolgt.

7. Verfahren nach Anspruch 5 oder 6, dadurch gekennzeichnet, daß man ein katalysatorfreies wäßriges Einkomponenten-Überzugsmittel nach einem der Ansprüche 1 bis 4 verwendet.

8. Verfahren zur Herstellung von Mehrschicht-Lackierungen durch Auftrag eines wäßrigen Basislacks auf ein zu lackierendes Substrat, gegebenenfalls kurzes Ablüften und naß-in-naß-Auftrag eines Klarlacks und anschließende gemeinsame thermische Härtung, dadurch gekennzeichnet, daß man ein katalysatorfreies Einkomponenten-Überzugsmittel nach einem der Ansprüche 1 bis 4 verwendet.

9. Verwendung des Überzugsmittels nach einem der Ansprüche 1 bis 4 zur Herstellung von säurebeständigen Klar- oder Decklack-Überzügen.

10. Verwendung nach Anspruch 9 zur Herstellung von säurebeständigen Klar-oder Decklack-Überzügen in Mehrschichtlackierungen.

11. Verwendung der Überzugsmittel nach einem der Ansprüche 1 bis 4 bei der Lackierung von Kraftfahrzeugen.

## Claims

1. Coating composition based on compounds suitable for Michael addition and crosslinking agents with CH-acid groups, characterised in that it is formulated as a one-component coating composition, is catalyst-free and contains:
A) one or more compounds acting as crosslinking agents having an average of at least two CH-acid hydrogen atoms and
B) one or more (meth)acrylate copolymers, polyester and/or polyurethane resins suitable for Michael addition having α,β-unsaturated groups attached via the carbonyl carbon atom of 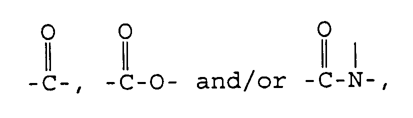 having a C=C equivalent weight of 85 to 1800 and a weight average molar mass of 170 to 50000, wherein the equivalent ratio of A:B is 2:1 to 1:2; together with solvents, customary lacquer additives, optionally water, optionally pigments and optionally extenders and wherein components A) and B) contain substantially no primary, secondary and tertiary amino groups and contain no reactive isocyanate.

2. Catalyst-free one-component coating composition according to claim 1, containing a crosslinking component A having on average at least two CH-acid hydrogen atoms, which originate from one or more of the following groupings, which may be identical or different: 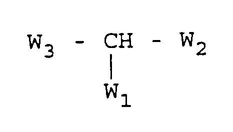 in which
W₁ = 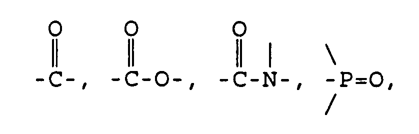 -CN or -NO₂,
W₂ = 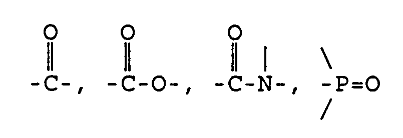 or -CN,
W₃ = 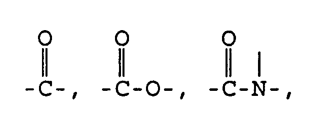 H, alkyl or alkylene,
wherein the residues 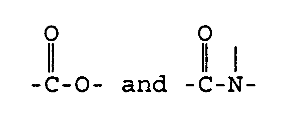 are each attached via the carbon atom to the CH group and the CH group is attached via at least one of the residues W₁, W₂ and/or W₃ to a polymeric or oligomeric unit.

3. Catalyst-free one-component coating composition according to one of the preceding claims in aqueous form with a solvent content of 0 to 15 wt.%, relative to the complete coating composition.

4. Catalyst-free one-component coating composition according to one of the preceding claims containing water and one or more emulsifiers.

5. Process for the production of acid-resistant clear lacquer or topcoat lacquer coatings by application of a coating composition based on CH-acid compounds and compounds suitable for Michael addition onto a substrate to be lacquer coated and subsequent thermal hardening of the resultant coating, characterised in that a catalyst-free one-component coating composition according to one of claims 1 to 4 is used and hardening is performed at temperatures of 100 to 180°C.

6. Process according to claim 5, characterised in that hardening proceeds at temperatures of 110°C to 180°C.

7. Process according to claim 5 or 6, characterised in that a catalyst-free, aqueous one-component coating composition according to one of claims 1 to 4 is used.

8. Process for the production of multilayer lacquer coatings by applying an aqueous base lacquer onto a substrate to be lacquer coated, optionally briefly flashing off and performing wet-on-wet application of a clear lacquer and subsequent combined thermal hardening, characterised in that a catalyst-free one-component coating composition according to one of claims 1 to 4 is used.

9. Use of the coating composition according to one of claims 1 to 4 for the production of acid-resistant clear lacquer or topcoat lacquer coatings.

10. Use according to claim 9 for the production of acid-resistant clear lacquer or topcoat lacquer coatings in multilayer lacquer coatings.

11. Use of the coating compositions according to one of claims 1 to 4 for automotive lacquer coating.

## Revendications

1. Revêtement à base de composés appropriés à l'addition de Michael et d'agent réticulant à groupes CH-azide, caractérisé en ce qu'on le formule en tant que monocomposant et sans catalyseur et il contient :
A) un ou plusieurs composés agissant comme agent réticulant avec en moyenne au moins deux atomes d'hydrogène CH-azide et
B) un ou plusieurs copolymères (méth)acryliques appropriés à l'addition de Michael, des résines polyester et/ou polyuréthane avec des groupes α,β-insaturés liés par le carbone carbonyle de groupes 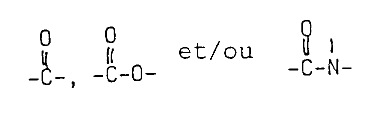 ayant un poids d'équivalent de C=C de 85 à 1800 et une masse molaire moyenne en poids de 170-50000,
où la proportion d'équivalent de A:B est 2:1 à 1:2 ; ainsi que des solvants, des additifs habituels en peinture, de l'eau le cas échéant, des pigments le cas échéant et des charges le cas échéant et où les composants A) et B) sont essentiellement exempts de groupes amino primaires, secondaires et tertiaires et exempts d'isocyanate réactif.

2. Revêtement monocomposant sans catalyseur selon la revendication 1, contenant un composant A d'agent réticulant ayant en moyenne au moins deux atomes d'hydrogène CH-azide qui proviennent de l'un ou de plusieurs des groupes suivants, qui peuvent être identiques ou différents : 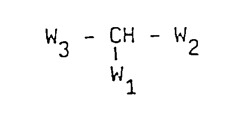 où
W₁ = 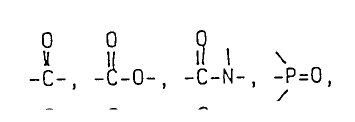 -CN ou -NO₂,
W₂ = 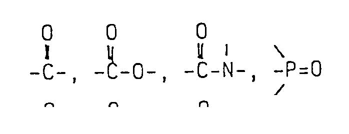 ou -CN,
W₃ = 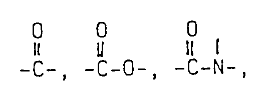 H, alkyle ou alkylène,
où les restes 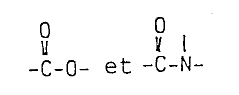 sont liés par l'intermédiaire de l'atome de carbone au groupe CH et le groupe CH est relié par au moins l'un des restes W₁, W₂ et/ou W₃ à une unité polymère ou oligomère.

3. Revêtement monocomposant sans catalyseur selon l'une des revendications précédentes, sous forme aqueuse avec une teneur en solvant de 0 à 15% en poids, par rapport à tout le revêtement.

4. Revêtement monocomposant sans catalyseur selon l'une des revendications précédentes, contenant de l'eau et un ou plusieurs émulsionnants.

5. Procédé de production de revêtement de peinture de couverture ou de vernis transparent par dépôt d'un revêtement à base de composés CH-azide et de composés permettant l'addition de Michael sur un substrat à peindre et ensuite on durcit thermiquement le revêtement obtenu, caractérisé en ce qu'on utilise un revêtement monocomposant sans catalyseur selon l'une des revendications 1 à 4 et qu'on réalise le durcissement à des températures de 100 à 180°C.

6. Procédé selon la revendication 5, caractérisé en ce qu'on réalise le durcissement à des températures de 110°C à 180°C.

7. Procédé selon la revendication 5 ou 6, caractérisé en ce qu'on utilise un revêtement monocomposant aqueux sans catalyseur selon l'une des revendications 1 à 4.

8. Procédé de production de laquage multicouche par dépôt d'une peinture de base aqueuse sur un substrat à peindre, le cas échéant, on réalise une évaporation de courte durée et le dépôt humide-surhumide d'un vernis transparent et ensuite on réalise le durcissement thermique global, caractérisé en ce qu'on utilise un revêtement monocomposant sans catalyseur selon l'une des revendications 1 à 4.

9. Utilisation du revêtement selon l'une des revendications 1 à 4 pour produire des revêtements de peinture de couverture ou de vernis transparent résistant aux acides.

10. Utilisation selon la revendication 9, pour produire des revêtements de peinture de couverture ou de vernis transparent résistant aux acides lors des laquages multicouches.

11. Utilisation de revêtement selon l'une des revendications 1 à 4, lors du laquage de véhicules automobiles.
